# EUROPEAN PATENT APPLICATION

(11) **EP 4 623 766 A1**
(43) Date of publication of application: **01.10.2025**
(21) Application number: 24167878.8
(22) Date of filing: 29.03.2024
(51) Int. Cl.: A47J 31/36

(54) **EXTRACTION MECHANISM OF COFFEE MAKER**

(71) Applicant: Zhejiang Xiwen Intelligent Technology Co., Ltd, Ningbo City Zhejiang Province (CN)
(72) Inventor: ZHANG, Songlin, Ningbo City (CN); YE, Keqing, Ningbo City (CN); DAI, Mengfang, Ningbo City (CN)
(74) Representative: Chung, Hoi Kan

(57) **Abstract**

The present disclosure relates to an extraction mechanism of a coffee maker, including a driving assembly, wherein an output end of the driving assembly is connected with a powder holding barrel, a powder feeding channel is disposed above the powder holding barrel, the driving assembly is provided with an extraction assembly, and the other end of the powder holding barrel is connected with a water inlet baffle part; the driving assembly drives the powder holding barrel to rotate to a downside corresponding to a lower end of the powder feeding channel, after coffee powder in the barrel falls into the powder holding barrel, the driving assembly continues to drive the powder holding barrel to rotate to the extraction assembly and to be matched and connected with the extraction assembly in a sealing way.

## Description

### TECHNICAL FIELD

The present disclosure relates to the technical field of coffee makers, in particular to an extraction mechanism of a coffee maker.

### BACKGROUND

At present, a coffee extraction apparatus is a device for extracting coffee, which is based on a basic principle that: ground coffee powder is put into the coffee extraction apparatus and is squeezed into pressed powder, then, high-temperature and high-pressure water flows through the pressed powder to extract relevant substances in the coffee powder, which form coffee together with hot water, and the coffee is discharged to a drinking container. The extracted pressed powder of the coffee is discharged. An existing extraction apparatus is provided with a moving part moving along a longitudinal axis and a capsule, the moving part moves by means of an operating rod, and during the movement, the moving part enables the capsule to enter a housing thereof, so that an effect that an axis of the capsule is lowered relative to an axis of the moving part is achieved. As a result, a neckhole of the capsule passes through a downside of a stopping apparatus. Then, a pipe fitting in the moving part supplies the hot water, and the water flows through the capsule to realize the extraction of the coffee. Such type of structure achieves the purpose of extracting the coffee by the reciprocation of the capsule along an axial direction under the cooperation of a water flow. However, the moving part and the capsule are disposed and move in the axial direction, and the operating rod swings when controlling the moving part to move to the capsule, in this way, the moving part and the capsule are tilted in position or are misplaced, which affects the use of a coffee maker for extraction. In addition, the structure is relatively complex, and the moving part is driven to move by the operating rod, which is troublesome in operation. In addition, when the coffee powder in the capsule is extracted with the hot water, the coffee powder can be accumulated and remained during each extraction, which results in incompleteness in extraction and inconvenience for clearing.

### SUMMARY

An object of the present disclosure is to provide an extraction mechanism of a coffee maker, which is capable of effectively improving the extraction effect, simple and reasonable in structure, simple and convenient to operate, and beneficial to the clearing of accumulated and remained coffee powder.

In order to solve the above-mentioned technical problems, the present disclosure provides the following technical solutions:

provided is an extraction mechanism of a coffee maker, including a driving assembly, wherein an output end of the driving assembly is connected with a powder holding barrel, a powder feeding channel by which coffee powder in the barrel conveniently falls into the powder holding barrel is disposed above the powder holding barrel, the driving assembly is provided with an extraction assembly conveniently matched and sleeved with the powder holding barrel, the other end of the powder holding barrel is connected with a water inlet baffle part, during work, the driving assembly drives the powder holding barrel to annularly rotate, and the powder feeding channel, the extraction assembly and the water inlet baffle part are matched to sequentially realize powder feeding, extraction and fallen powder clearing.

Preferably, the water inlet baffle part includes a water inlet pipe connected to one end of the powder holding barrel in a sealing way, an end, extending into the powder feeding channel, of the water inlet pipe is provided with a baffle plate, a first sealing ring is disposed between the baffle plate and the powder holding barrel, and a water inlet hole is connected to a middle between the water inlet pipe and the baffle plate.

Further preferably, the extraction assembly includes an extraction rack and a filter disk, an extraction cavity is formed between the extraction rack and the filter disk, the extraction rack is provided with a coffee flow channel, and a second sealing ring is disposed between the filter disk and the extraction rack.

Further preferably, a base plate is provided with an arc-shaped rotary limiting groove corresponding to a downside of the water inlet pipe, and a lower end of the water inlet pipe is provided with a rotary limiting rod.

Further preferably, a section of the powder holding barrel is fan-shaped, an external diameter of the water inlet pipe is smaller than an internal diameter of the powder holding barrel, an external diameter of an inner end of the baffle plate is smaller than or equal to the internal diameter of the powder holding barrel, and the water inlet pipe and the baffle plate are integrally molded.

Further preferably, the driving assembly includes the base plate and a motor disposed in the middle of the base plate, and the extraction assembly is disposed on the base plate.

Further preferably, an upper end of an output shaft of the motor is provided with a rotary disk, and the rotary disk is integrally connected to the powder holding barrel by a connecting block.

The present disclosure has the beneficial effects that: the extraction mechanism includes a driving assembly, wherein an output end of the driving assembly is connected with a powder holding barrel, a powder feeding channel by which coffee powder in the barrel conveniently falls into the powder holding barrel is disposed above the powder holding barrel, the driving assembly is provided with an extraction assembly conveniently matched and sleeved with the powder holding barrel, and the other end of the powder holding barrel is connected with a water inlet baffle part; during work, the driving assembly drives the powder holding barrel to annularly rotate, and the powder feeding channel, the extraction assembly and the water inlet baffle part are matched to sequentially realize powder feeding, extraction and fallen powder clearing; specifically, the driving assembly drives the powder holding barrel to rotate to a downside corresponding to a lower end of the powder feeding channel, after coffee powder in the barrel falls into the powder holding barrel, the driving assembly continues to drive the powder holding barrel to rotate to the extraction assembly and to be matched and connected with the extraction assembly in a sealing way, and then, a water flow is pumped into the extraction assembly through the water inlet baffle part by a water pump to realize extraction; after the extraction is ended, the driving assembly drives the powder holding barrel to reversely rotate, when the powder holding barrel reversely rotates to a downside of the powder feeding channel, it is convenient for superfluous coffee powder on the powder feeding channel to fall, the powder holding barrel continues to reversely rotate until reaching the maximum extreme position of the water inlet baffle part, at the same time, coffee powder accumulated and remained in the powder holding barrel are pushed out by one end of the water inlet baffle part. In this way, the extraction mechanism is simple and reasonable in structure, simple and convenient to operate, capable of effectively improving the extraction effect, and beneficial to the clearing of the accumulated and remained coffee powder.

### BRIEF DESCRIPTION OF DRAWINGS

FIG. 1 is a schematic structural diagram of the present disclosure;
FIG. 2 is a schematic diagram of an exploded structure of the present disclosure;
FIG. 3 is a schematic structural diagram of a powder holding barrel not rotating in the present disclosure;
FIG. 4 is a schematic structural diagram of the powder holding barrel rotating to a downside of a powder feeding channel to feed powder in the present disclosure;
FIG. 5 is a schematic structural diagram of the powder holding barrel rotating to a filter disk to realize extraction in a sealing way in the present disclosure; and
FIG. 6 is a schematic structural diagram achieved after the powder holding barrel reversely rotates in the present disclosure.

### DETAILED DESCRIPTION OF THE EMBODIMENTS

The present disclosure will be further described in detail below in conjunction with the accompanying drawings and the embodiments.

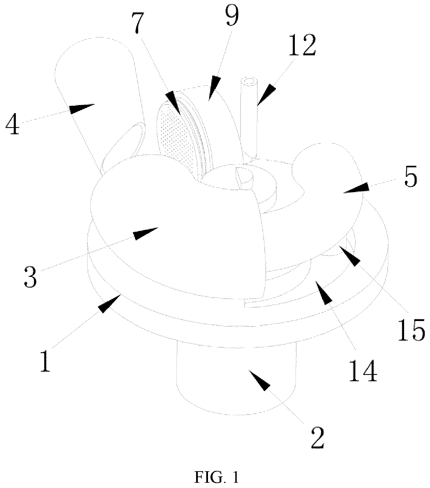

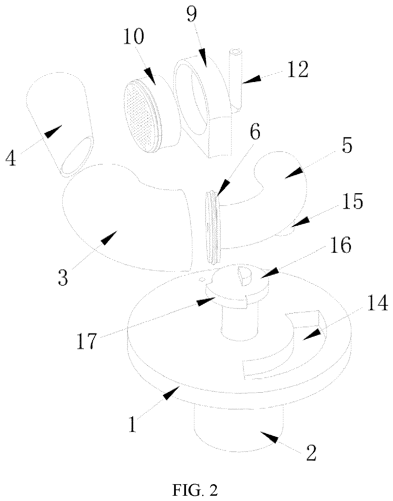

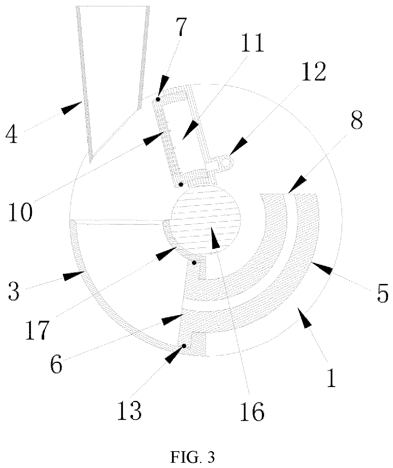

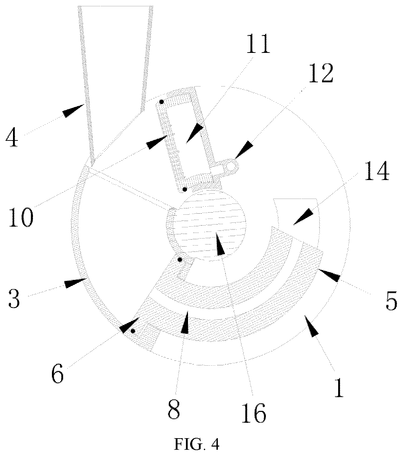

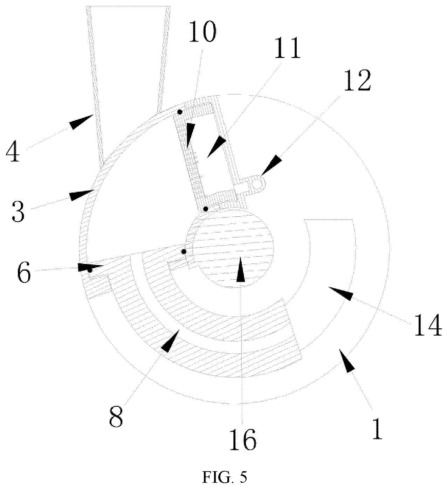

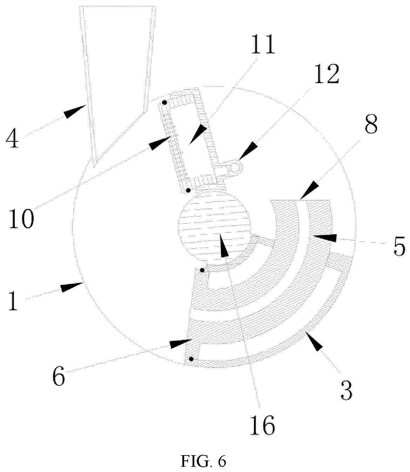

As shown in FIGs. 1 to 6, provided is an extraction mechanism of a coffee maker, including a driving assembly, wherein the driving assembly includes a base plate 1 and a motor 2 disposed in the middle of the base plate 1, an extraction assembly is disposed on the base plate 1, an output end of the motor 2 is connected with a powder holding barrel 3, a powder feeding channel 4 by which coffee powder in the barrel conveniently falls into the powder holding barrel 3 is disposed above the powder holding barrel 3, the base plate 1 is provided with the extraction assembly conveniently matched and sleeved with the powder holding barrel 3, the other end of the powder holding barrel 3 is connected with a water inlet baffle part disposed on the base plate 1, the motor 2 drives the powder holding barrel 3 to annularly rotate to a downside corresponding to a lower end of the powder feeding channel 4, an upper end of an output shaft of the motor 2 is provided with a rotary disk 16, the rotary disk 16 is integrally connected to the powder holding barrel 3 by a connecting block 17, and the motor 2 is a forward and reverse rotation motor 2; after coffee powder in the barrel falls into the powder holding barrel 3, the motor 2 continues to drive the powder holding barrel 3 to annularly rotate to the extraction assembly and to be matched and connected with the extraction assembly in a sealing way, and then, a water flow is pumped into the extraction assembly through the water inlet baffle part by a water pump to realize extraction; after the extraction is ended, the motor 2 drives the powder holding barrel 3 to annularly and reversely rotate, when the powder holding barrel 3 reversely rotates to a downside of the powder feeding channel 4, it is convenient for superfluous coffee powder on the powder feeding channel 4 to fall, the powder holding barrel 3 continues to reversely rotate until reaching the maximum extreme position of the water inlet baffle part, at the same time, coffee powder accumulated and remained in the powder holding barrel 3 are pushed out by one end of the water inlet baffle part. In this way, the extraction mechanism is simple and reasonable in structure, simple and convenient to operate, capable of effectively improving the extraction effect, and beneficial to the clearing of the accumulated and remained coffee powder.

In the present embodiment, the water inlet baffle part includes a water inlet pipe 5 connected to one end of the powder holding barrel 3 in a sealing way, an end, extending into the powder feeding channel 4, of the water inlet pipe 5 is provided with a baffle plate 6, a first sealing ring 7 is disposed between the baffle plate 6 and the powder holding barrel 3, and a water inlet hole 8 is connected to a middle between the water inlet pipe 5 and the baffle plate 6; the water inlet pipe 5 and the baffle plate 6 can rotate together with the powder holding barrel 3 when the powder holding barrel 3 is driven by the motor 2 to rotate; after the powder holding barrel 3 rotates to a position where the powder holding barrel 3 is connected to the extraction assembly in a sealing way, water is pumped into the powder holding barrel 3 through the water inlet hole 8 by a water pump connected to the water inlet pipe 5, and the powder holding barrel 3 is matched with the extraction assembly to perform mixed extraction on the coffee powder; and after the extraction is ended, the water inlet pipe 5 is fixed, and when the powder holding barrel 3 is driven by the motor 2 to reversely rotate, the accumulated and remained coffee powder in the powder holding barrel 3 are cleared by the baffle plate 6.

In the present embodiment, the extraction assembly includes an extraction rack 9 and a filter disk 10, an extraction cavity 11 is formed between the extraction rack 9 and the filter disk 10, the extraction rack 9 is provided with a coffee flow channel 12, and a second sealing ring 13 is disposed between the filter disk 10 and the extraction rack 9. After the motor 2 drives the powder holding barrel 3 to be connected to the filter disk 10 in a sealing way under the cooperation of the second sealing ring 13, and then, the water is pumped to the powder holding barrel 3 through the water inlet hole 8 by the water pump and is mixed with the coffee powder, a mixture enters the extraction cavity 11 for extraction after passing through the filter disk 10, and finally, extracted coffee flows out of the coffee flow channel 12.

In the present embodiment, the base plate 1 is provided with an arc-shaped rotary limiting groove 14 corresponding to a downside of the water inlet pipe 5, and a lower end of the water inlet pipe 5 is provided with a rotary limiting rod 15. When the powder holding barrel 3 is connected to the filter disk 10 in a sealing way after being driven by the motor 2 to rotate and the powder holding barrel 3 reversely rotates after extraction, the powder holding barrel 3 rotates to drive the water inlet pipe 5 to rotate together, and the water inlet pipe 5 rotates by taking a movement space of the rotary limiting rod 15 in the rotary limiting groove 14 as a rotation track.

In the present embodiment, a section of the powder holding barrel 3 is fan-shaped, an external diameter of the water inlet pipe 5 is smaller than an internal diameter of the powder holding barrel 3, an external diameter of an inner end of the baffle plate 6 is smaller than or equal to the internal diameter of the powder holding barrel 3, and the water inlet pipe 5 and the baffle plate 6 are integrally molded. The powder holding barrel 3, the water inlet pipe 5 and the extraction assembly are set to be of an annular structure capable of forwards and reversely rotating, which is simple and reasonable in overall rotation adjustment and beneficial to the improvement of the extraction effect of the coffee and the convenience in clearing after extraction.

The present disclosure works based on a principle that: during work, when the motor 2 forwards rotates to the downside of the powder feeding channel 4 clockwise and after the coffee powder in the barrel falls into the powder holding barrel 3 according to a certain quantity, the motor 2 continues to drive the powder holding barrel 3 to rotate to one side of the extraction rack 9 and to be connected to the filter disk 10 in a sealing way by the first sealing ring 7, the powder holding barrel 3 rotates to drive the water inlet pipe 5 to rotate together, then, water flows through the powder holding barrel 3 through the water inlet baffle part by the water pump so as to be mixed with the coffee powder, then, a mixture enters the extraction cavity 11 for extraction after passing through the filter disk 10, and finally, extracted coffee flows out of the coffee flow channel 12; after the extraction is ended, the motor 2 drives the powder holding barrel 3 to reversely rotate, when the powder holding barrel 3 reversely rotates to the downside of the powder feeding channel 4, it is convenient for superfluous coffee powder on the powder feeding channel 4 to fall, the powder holding barrel 3 continues to reversely rotate to drive the water inlet pipe 5 to reversely rotate together, the water inlet pipe 5 stops moving when the rotary limiting rod 15 reaches the maximum position on the right side of the rotary limiting groove 14, at the moment, the powder holding barrel 3 continues to reversely rotate until the baffle plate 6 rotates to the maximum position on the leftmost side of the powder holding barrel 3, in this way, the coffee powder accumulated and remained in the powder holding barrel 3 is pushed out by the baffle plate 6.

According to the concept of the present disclosure, the specific implementation and the application scope can be both changed, but contents in the present description should not be understood as limitations on the present disclosure.

## Claims

1. An extraction mechanism of a coffee maker, comprising a driving assembly, wherein an output end of the driving assembly is connected with a powder holding barrel, a powder feeding channel by which coffee powder in the barrel conveniently falls into the powder holding barrel is disposed above the powder holding barrel, the driving assembly is provided with an extraction assembly conveniently matched and sleeved with the powder holding barrel, the other end of the powder holding barrel is connected with a water inlet baffle part, during work, the driving assembly drives the powder holding barrel to annularly rotate, and the powder feeding channel, the extraction assembly and the water inlet baffle part are matched to sequentially realize powder feeding, extraction and fallen powder clearing.

2. The extraction mechanism of the coffee maker according to claim 1, wherein the water inlet baffle part comprises a water inlet pipe connected to one end of the powder holding barrel in a sealing way, an end, extending into the powder feeding channel, of the water inlet pipe is provided with a baffle plate, a first sealing ring is disposed between the baffle plate and the powder holding barrel, and a water inlet hole is connected to a middle between the water inlet pipe and the baffle plate.

3. The extraction mechanism of the coffee maker according to claim 1, wherein the extraction assembly comprises an extraction rack and a filter disk, an extraction cavity is formed between the extraction rack and the filter disk, the extraction rack is provided with a coffee flow channel, and a second sealing ring is disposed between the filter disk and the extraction rack.

4. The extraction mechanism of the coffee maker according to claim 2, wherein a base plate is provided with an arc-shaped rotary limiting groove corresponding to a downside of the water inlet pipe, and a lower end of the water inlet pipe is provided with a rotary limiting rod.

5. The extraction mechanism of the coffee maker according to claim 2, wherein a section of the powder holding barrel is fan-shaped, an external diameter of the water inlet pipe is smaller than an internal diameter of the powder holding barrel, an external diameter of an inner end of the baffle plate is smaller than or equal to the internal diameter of the powder holding barrel, and the water inlet pipe and the baffle plate are integrally molded.

6. The extraction mechanism of the coffee maker according to claim 1, wherein the driving assembly comprises the base plate and a motor disposed in the middle of the base plate, and the extraction assembly is disposed on the base plate.

7. The extraction mechanism of the coffee maker according to claim 6, wherein an upper end of an output shaft of the motor is provided with a rotary disk, and the rotary disk is integrally connected to the powder holding barrel by a connecting block.
